# EUROPEAN PATENT APPLICATION

(11) **EP 2 827 595 A1**
(43) Date of publication of application: **21.01.2015**
(21) Application number: 13306019.4
(22) Date of filing: 16.07.2013
(51) Int. Cl.: H04N 21/2343, H04N 21/258, H04N 21/24, H04N 21/658, H04N 21/8543

(54) **Method and system for delivering multimedia components**

(71) Applicant: ALCATEL LUCENT, 92100 Boulogne-Billancourt (FR)
(72) Inventor: Verdot, Vincent, 91640 Fontenay-Lès-Briis (FR); Gaste, Yann, 92350 Le Plessis-Robinson (FR)
(74) Representative: Hylarides, Paul Jacques

(57) **Abstract**

The invention relates to a method of delivering multimedia components to a consumer, comprising:
-providing a multimedia container with an hierarchical multimedia descriptor including information representative of the hierarchical relationships between the individual components in the multimedia container;
- delivering the hierarchical multimedia descriptor to the consumer;
- selecting by the consumer at least one multimedia component from the multiple multimedia components to be delivered to the consumer device based on the information in the hierarchical multimedia descriptor and on information about the network environment and/or endpoint constraints of the consumer device;
- requesting by the consumer device only the delivery of the selected at least one multimedia component;
- delivering the requested multimedia components to the consumer device.

## Description

### Field of Invention

The invention relates to a method and system for delivering multimedia components in a multimedia container to a consumer device.

### Background

Network infrastructure is intrinsically hostile to providing multimedia components over a network to a consumer. Several network environment constraints such as delay, jitter, packet loss, and limited bandwidth, may prevent the multimedia components (i.e. multimedia objects, for instance streams) to be delivered correctly to the consumer. Furthermore, consumer's end-point constraints, such as bit rate, screen resolution, language, and age, may also prevent the correct delivery of the multimedia components.

For instance, if the available network or end-point resources are not sufficient for the multimedia component's requirements, their content may be randomly damaged (e.g. resulting in dropped or delayed frames). As a consequence the quality of experience of the delivery is significantly impacted: image freezes, unsynchronized audio and video, poor quality of images and sounds, or loss of connectivity may occur.

Currently there are two main approaches for dealing with the quality of delivery of multimedia streams. A first approach is protocol-based (negotiation) while a second approach is codec-based (multi-layers).

During a multimedia session initiation procedure, various control protocols (e.g. RTSP, SIP, HTTP, RTMP) provide mechanisms that allow the involved endpoints (clients and servers) to negotiate the media quality corresponding to the source and destination capabilities. In this way an attempt is made to deliver the multimedia streams in more or less optimized conditions. However, these mechanisms are not scalable in terms of CPU and network resources as it requires one negotiation per client and potentially as many data streams to be processed and delivered.

A technique known as "Dynamic Adaptive Streaming over HTTP", also abbreviated as MPEG-DASH, breaks up a multimedia stream into a sequence of small HTTP-based segments, each segment covering a short interval of playback time. The multimedia stream is made available at a variety of different bit rates. This means that alternative segments encoded at different bit rates and covering aligned short intervals of play back time are generated. The consumer may select from the alternative segments the next segment to be delivered based on current network conditions. For instance, the consumer may select the segment with the highest bit rate that would still enable an in-time delivery of the segments, without stalls or rebuffering events during playback. Consequently, MPEG-DASH is a negotiation-less technique that enables the consumer to request a multimedia stream depending on network constraints. However, if this approach is more efficient than the previous ones, it also can apply only to a specific medium and not to a multimedia container as such.

In line with the second approach codec-based adaptive mechanisms operated by the endpoints are known in the art. In this approach, the audio and video channels can be encoded as multi-layer streams composed of a base (minimum quality) and additional enhancement layers. Examples of these adaptive mechanisms are Scalable Video Coding (SVC) according to the H.264 SVC standard, the bitrate peeling technique used in Ogg's Vorbis audio encoded streams or MPEG-4 SLS. In Scalable Video Coding (SVC) a server sends several versions of the same multimedia component to the consumers with different capabilities. These codec-based adaptive mechanisms may be scalable to a certain extent. However, they can only be applied to each stream individually (i.e. audio and video tracks) and they are unsuitable for text and data tracks. Moreover, the resulting "multi-layered" multimedia object (e.g. a multimedia container) must be fully transferred to the consumer, which puts a heavy load on the available resources.

Multimedia components (for instance, audio, video, text and data channels) may be held in a multimedia container supporting a variety of compression and decompression codecs. An example of a multimedia container is Matroska, an open standard free format that can hold an unlimited number of video, audio, picture, or subtitle tracks in one file. Other examples of multimedia containers are WebM, AVI, and Quicktime.

These multimedia containers tend to become more and more complex in time. Nowadays containers may integrate features in a single multimedia stream and may be able to provide functions similar to DVD or Blu-ray supports (multiple audio and video tracks, subtitles, metadata, interactivity, etc).

One of the technical disadvantages associated with the use of multimedia containers is that all multimedia components are treated equally in a container, irrespective of the (current) network conditions (constraints) or constraints posed by the device at the consumer's end. Another disadvantage is that a container must be fully transferred to the consumer before it can be rendered, also irrespective of the end-point constraints of the consumer and the network environment.

As the above-mentioned two approaches for dealing with the delivery of multimedia components operate on the individual streams (data), they only offer lower-level optimizations and so they cannot adapt the whole multimedia container to the above-identified constraints. Thus, the size of complex containers such as Matroska, able to carry multiple audio, video, text and data streams, can easily exceed the network and endpoint capabilities, even with stream-level optimizations. To date there appears to be no solution available to handle the adaptability of the whole multimedia object considering every of its streams.

Consequently, it is an object of the present invention to provide a method and system for providing to a consumer multimedia components from a multimedia container wherein the above identified disadvantages and/or other disadvantages of the prior art have been reduced or even removed.

It is a further object of the present invention to provide a more flexible method and system for delivering multimedia components to a consumer.

It is a further object of the present invention to provide a method and system for correctly delivering multimedia components to a consumer in case of poor network and consumer device conditions.

### Summary

According to a first aspect of the invention at least one of the above-identified objects may be achieved in a method of delivering to a consumer multimedia components in a multimedia container comprising multiple multimedia components and a multimedia descriptor, the method comprising:
- providing a multimedia container with an hierarchical multimedia descriptor including information representative of the hierarchical relationships between the individual components in the multimedia container;
- delivering the hierarchical multimedia descriptor to the consumer device;
- selecting by the consumer device at least one multimedia component from the multiple multimedia components to be delivered to the consumer device based on the information in the hierarchical multimedia descriptor and on information about the network environment and/or end-point constraints of the consumer device;
- requesting by the consumer device only the delivery of the selected at least one multimedia component;
- delivering the requested multimedia components to the consumer device.

Since the delivery of multimedia content is made dependent on the network environment and/or constraints posed by the end-point of the consumer device, the delivery can be made more flexible and efficient.

The delivery may be performed directly from a producer to consumer device, or indirectly via a media server (from producer to media server and from media server to consumer or from an external data source via the media server to the consumer) and/or from a service provider directly to the consumer. In the latter case the service provider may be configured to generate multimedia content, for example by automatically generating a text stream from an audio component received from the producer using Automatic Speech Recognition.

Selecting the at least one multimedia component by the consumer device may comprise adapting the received hierarchical multimedia descriptor to the particular consumer's end-point constraints and/or to the network environment. Requesting the delivery of multimedia components may comprise sending a request to deliver the selected at least one multimedia component using the adapted hierarchical multimedia descriptor. Therefore, based on the adapted version of the hierarchical multimedia descriptor received by the media player, the media player only provides the selected subset of multimedia components to the consumer device.

In a further embodiment of the invention the provided hierarchical multimedia descriptor includes information on multiple multimedia component versions in which a multimedia component in the container may be made available. Component versions may relate to the capabilities of the multimedia component, for instance its bit rate, video or audio quality, etc. The method then may comprise having the consumer device select at least one multimedia component version to be delivered to the consumer device based on the information in the hierarchical multimedia descriptor and on information about the network environment and/or end-point constraints. Once a version is selected, the method may comprise having the consumer device request only the delivery of the selected at least one multimedia component of the selected multimedia component version.

The selection of the at least one multimedia component version may comprise adapting the received hierarchical multimedia descriptor to the particular consumer device's end-point constraints and/or to the network environment. Requesting the delivery of the selected at least one multimedia component then comprises sending a request to deliver the selected at least one multimedia component of the selected multimedia component version using the adapted hierarchical multimedia descriptor.

The hierarchical multimedia descriptor comprises an indication of the hierarchy of the multimedia components in the container. In case of limited resources a choice has to be made which components and/or which component versions are to be delivered to the consumer device (and which components/ component versions should not be delivered). This choice is preferably determined by the hierarchy specified in the multimedia descriptor. According to embodiments of the invention the method comprises selecting a subset of multimedia components (i.e. one or more multimedia components) from the multiple multimedia components having the highest one or more ranks in the hierarchy. The selection is preferably performed in the order of reducing rank in the hierarchy. For instance, in case of a limited bandwidth, the component of highest hierarchy is selected and, if the bandwidth so admits, one or more of the components lower in the hierarchy.

The selection of the subset of multimedia components from all possible multimedia components (and the associated adaptation of the hierarchical multimedia descriptor) may be performed in such a manner that an optimal global delivery of the multimedia components of the container is attained (in contrast to considering each multimedia component individually).

In embodiments of the invention information in the hierarchical multimedia descriptor is representative of the properties of the multimedia components, and/or of the dependencies and relationships between the multimedia components. Furthermore, the multimedia components of a container may be classified as nodes in an hierarchical tree structure. The selection of a subset of multimedia components may be performed in accordance with the hierarchy of the associated nodes in the hierarchical tree structure.

Adapting the information in the hierarchical multimedia descriptor may comprise processing every node of the tree structure with respect to the dependencies indicated in the multimedia descriptor.

In a specific embodiment of the invention the method comprises:
- configuring by the producer and/or by a service provider, the multimedia descriptor with appropriate information on the multimedia components in the container;
   and/or wherein delivering the hierarchical multimedia descriptor to the consumer device comprises:
- sending the hierarchical multimedia descriptor from the producer or service provider to the consumer device.

The container may be any container having multiple multimedia components and an multimedia descriptor. The container may be based on Matroska, WebM, DivX or simillar container formats. The multimedia components of the container may include streams and or/objects containing at least one of video, audio, text and data.

According to a second aspect of the invention at least one of these objects may be achieved in a server assembly in a system for delivering multimedia components from a server assembly to a consumer device, the multimedia components being part of a multimedia container comprising multiple multimedia components and a multimedia descriptor, the system comprising a server assembly configured to:
- provide a multimedia container with an hierarchical multimedia descriptor including information representative of the hierarchical relationships between the individual multimedia components in the multimedia container;
- deliver the hierarchical multimedia descriptor over a network to the consumer device;
- receive a request for multimedia components;
- deliver requested multimedia components over the network to the consumer device.

According to a third aspect of the invention at least one of these objects may be achieved in a consumer device in a system for delivering multimedia components from a server assembly to a consumer, the consumer device being configured to:
- receive from the server assembly a multimedia container with an hierarchical multimedia descriptor including information representative of the hierarchical relationships between the individual multimedia components in the multimedia container;
- select a subsetof multimedia components from multiple multimedia components to be delivered to the consumer based on the information in the hierarchical multimedia descriptor and on information about the network environment and/or end-point constraints of the consumer
- request only the delivery of the selected subset of multimedia components from the server assembly.

According to an embodiment of the invention the server assembly comprises a media server and a service provider server. In this embodiment the producer server, media server and service provider server are connected to the consumer device through a network. In other embodiments one or more of the producer server, media server and service provider server are combined into one common server.

In an embodiment of the invention the consumer device is configured to adapt the received hierarchical multimedia descriptor to the consumer device's end-point constraints and/or to the network environment so as to provide an adapted hierarchical multimedia descriptor. The adapted hierarchical multimedia descriptor may then be used to have the consumer device request the delivery of the selected at least one multimedia component, for instance by sending the adapted hierarchical multimedia descriptor to the server assembly.

In addition to or instead of the selection of one or more (i.e. a subset of) multimedia components from the container to deliver to the consumer device, the server assembly may be configured to deliver multimedia components in a suitable version, i.e. a version providing suitable capabilities in view of the restrictions posed by the end-point constraints and the quality of the network. For instance, the server assembly may be configured to deliver a specific multimedia component in a low bit rate when the quality of the network is poor, whereas a higher bit rate may be employed when the network quality is good.

The selection of the proper version of the multimedia component may involve adapting the received hierarchical multimedia descriptor to the particular consumer device's end-point constraints and/or to the network environment. The consumer device then may request the delivery of the selected at least one multimedia component by sending the adapted hierarchical multimedia descriptor to the sever assembly.

In embodiments of the invention the server assembly is configured to classify the multimedia components of a container as nodes in an hierarchical tree structure and to include information representative of the classification in the hierarchical multimedia descriptor.

In further embodiments of the invention the consumer device is configured to select a subset of multimedia components in accordance with the hierarchy of the associated nodes in the hierarchical tree structure.

According to a further aspect of the invention a system for delivering multimedia components from a server assembly to a consumer is provided, wherein the system comprises a server assembly and one or more consumer devices, as defined herein.

According to a further aspect of the invention a computer program is provided wherein the computer program comprises a code for performing the methods as defined herein, when the code is run on a computer.

The advantages of the system according to embodiments of the present invention correspond to those described above in connection with methods according to embodiments of the present invention.

Further advantages, features and details of the invention will be elucidated on the basis of the following description of a several embodiments thereof. Reference is made in the description to the figures, in which:
figure 1 shows an embodiment of a system for providing multimedia content from a producer to a consumer device;

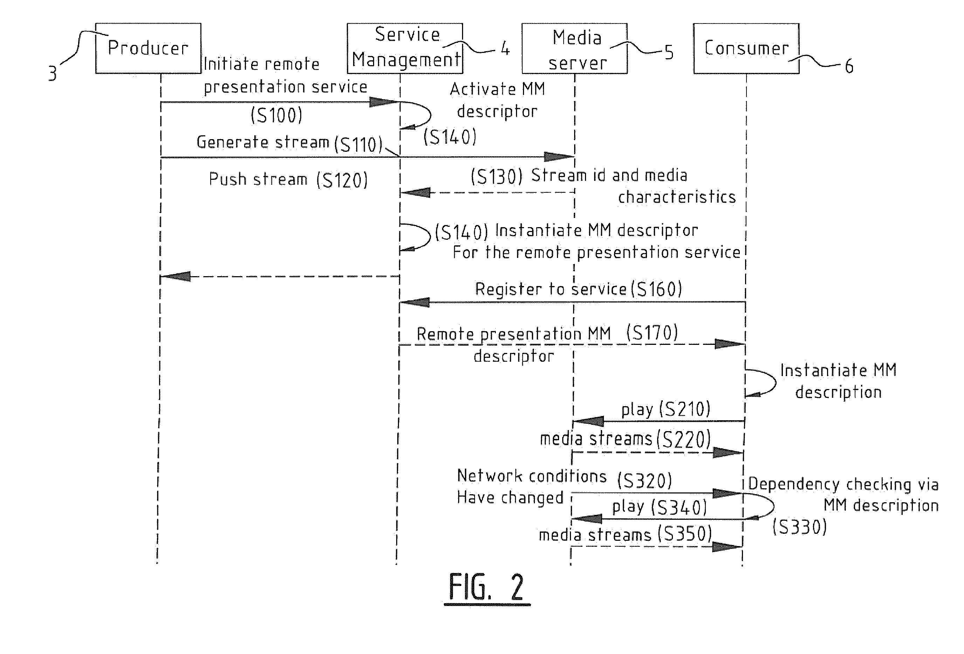

figure 2 is a diagram showing an example of the hierarchical tree structure of the information in an hierarchical multimedia descriptor in a remote presentation application;
figure 3 is a sequence diagram showing the communication between functional components of the system of figure 1, in the remote presentation application.

### Description of Embodiments

Embodiments of the present invention are based on the insight of the inventors that a multimedia container carrying multiple multimedia components could be more efficiently optimized (i.e. adapted to various constraints), if knowledge is obtained about how the entire container (including all multimedia components, such as a variety of streams) is damaged or altered by the environmental constraints (typically the limited bandwidth) and the constraints of the end-points (for instance, at the end of the consumer device, the media server and/or the producer). Based on this knowledge a requested service, for instance the rendering of specific multimedia content, could be satisfactorily provided with only a subset of the multimedia components present in the container. When only a subset of multimedia components (i.e. one or more components selected from all multimedia components in the container) is to be delivered to the consumer device, this would require less resources compared to the situation wherein the entire container is delivered.

Knowledge about the content of the multimedia container is provided by the producer in the metadata of the container. The metadata present information about the multimedia container as a structured set of multimedia components. The structure of the set of multimedia components is hierarchical and may be characterized by properties, dependencies and relationships. This information integrated into the multimedia container may confer more flexibility to the streaming and rendering mechanisms. It provides to the consumer device information on how to modify and combine the various pieces of media content in the container, based on the environmental constraints and/or end-point constraints.

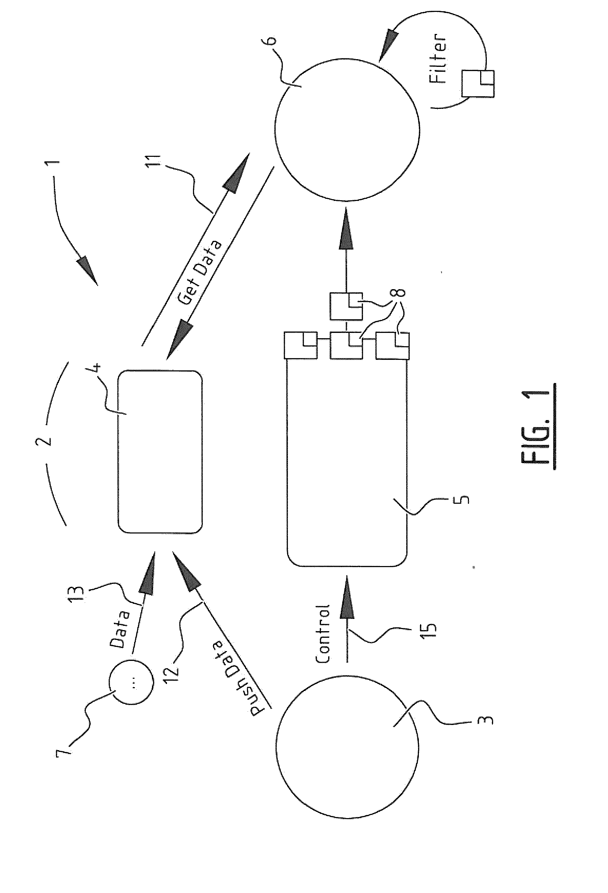

Figure 1 represents an exemplary system 1 for providing multimedia content according to an embodiment of the invention. The system 1 comprises a number of functional entities interconnected via one or more networks 2. These functional entities may be embodied as separate hardware units (servers), in other embodiments several functional entities may be combined into one or more combined hardware units.

The system 1 comprises one or more producers 3, one or more media servers 4, one or more service providers 5 and one or more consumer devices 6. The system may also comprise one or more external sources 7. The consumer device 6 is the destination for the delivery of the multimedia components. Upon sending a request 10 by the consumer device 6, the media server 4 may deliver 11 multimedia components. The consumer device 6 may receive the multimedia components and render them in an appropriate way.

The producer 3 typically is the source of the multimedia components. The producer 3 orchestrates and sends (12) a set of various multimedia components, i.e. one ore more data streams (containing video, audio, text, and/or data), directly to the media server 4. Additionally or alternatively, the producer 3 may have the external source 7 send (13) multimedia components to the media server 4.

The system also comprises a service management unit 5, herein also referred to as the service provider. The service provider is the server or server application which handles the service logic. Upon receiving a control message (15) from the producer 3 the service provides 5 exposes interfaces 8 (and API's) to initiate and control the service delivery between the producer and the consumer device. The service provided can be of any suitable type, for instance (but not restricted to) Video on Demand, video streaming/sharing, live broadcast, remote presentation, video gaming, and multi-point communication.

A further functional entity is the media server 4. The media server may receive multimedia components pushed (12) from the producer to the media server and/or transmitted (13) by the external source 7. Media server 4 may also dispatch (11) the received (and possibly processed) multimedia components to one or more consumer devices. Any streams delivered to consumer device 6 may be identified using a unique ID. Optionally, the media server 4 may perform basic processing operations on the incoming multimedia components (for instance, media streams). Examples of basic processing operations are compression and transcoding.

The multimedia containers according to embodiments of the invention comprise an hierarchical multimedia descriptor. The hierarchical multimedia descriptor contains metadata defining a hierarchical tree structure wherein the individual multimedia components in the container constitute the nodes of the tree. Additionally, the nodes of the tree also describe the properties of the associated multimedia components (for instance, media weighting / priority) in order to indicate how the multimedia component (medium) should (or must) be consumed by the consumer device (for instance, by a multimedia player). The table below gives a non-exhaustive list of multimedia component properties.

**Table 1 List of possible multimedia component properties (medium properties) included in nodes**

| **Name** | **Card.** | **Range** | **Description** |
|---|---|---|---|
| id | 1 | string | Unique value used to identify a medium (component) within the container. |
| type | 1 | [audio, video, image, data, text, ...] | Type of content, used to identify what properties are available. The consumer device should ignore unsupported/unknown types. |
| codec | 1 | Codec ID (e.g. FourCC) | Unique codec identifier that indicates the type of encoding of the media stream. |
| src | 1 | URI | A pointer to the data. |
| size | 0..1 | unsigned integer | Size of the data stream in Bytes (if applicable). |
| bitrate | 0..1 | unsigned long | Bitrate of the data stream in bits per second (if applicable). |
| sampleRate | 0..1 | unsigned integer | Sample rate of the media stream in Hz |
| lang | 0..1 | Language code (e.g. ISO 639 1) | Media data localization. |
| channels | 0..1 | unsigned integer | Number of audio channels. |
| resolution | 0..1 | unsigned integer x unsigned integer | Display resolution (height x width) in pixels. |
| ratio | 0..1 | unsigned float | Display format ratio. |
| default | 0..1 | boolean | Set to true when the medium is preferred by the producer over other "children" (same level & same parent media). |

A link between two nodes represent the dependency or constraint between the multimedia components represented by the nodes. These dependencies are expressed by the multimedia components producer. Table 2 provides a non-exhaustive list of constraints (link types) representative of the dependencies or constraints between two multimedia components.

**Table 2 List of constraints (link types)between two multimedia components**

| Name | Read... | Description |
|---|---|---|
| First constraint | "is required by" | Destination node exists only if source node exists. |
| Second constraint | "is bound to" | Default constraint + if source node exists, destination node must also exist. |
| etc. | | |

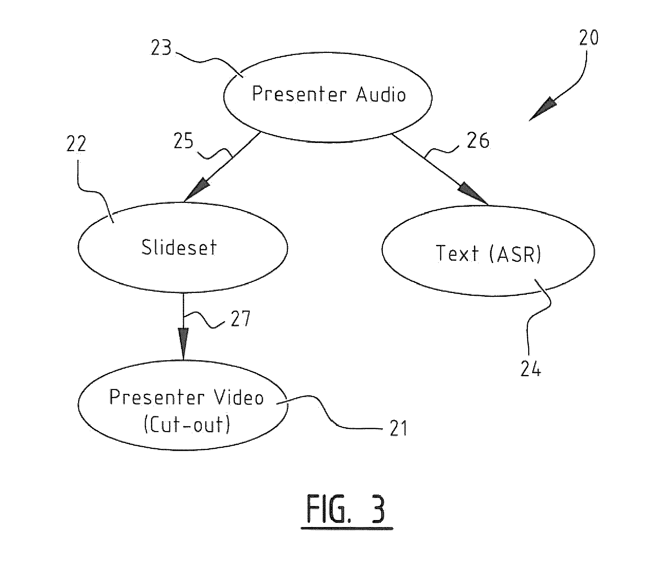

Figure 3 shows an example of an hierarchical tree structure 20 representative of information present in a typical multimedia descriptor. The lowermost node 21 represents a multimedia component (for instance, a video stream) that needs the delivery of another multimedia component (for instance, a set of slides) of the intermediate node 22. The multimedia component according to the intermediate node 22 in turn needs the delivery of the multimedia component of the upper node 23 (for instance an audio stream). Whenever the network environment puts a constraint on the delivery of the streams, for instance because the available bandwidth is limited or other resources are not sufficient for delivery of the whole container (i.e. the combined multimedia components), the system may determine from the information in the hierarchical multimedia descriptor and using the protocol that exploits the information in the hierarchical multimedia descriptor how to modify and combine the various multimedia components to manage (and possibly optimize) the overall content delivery. For instance, the system may decide to refrain from delivery of the multimedia component of the lowermost node 21 or even to also refrain from delivery of the multimedia component of the node 22 in case the available bandwidth of the network 2 is temporarily or permanently restricted. The system could also decide to deliver a version of the lowermost node 21 having less capabilities, for instance a lower bit rate, if the environmental conditions or the end-point constraints so require.

In embodiments of the invention the information about the network environment (for instance, bandwidth, actual speed of the network connection, etc.) is generated by the media server 4. The media server may provide this information to the service provider 5. Based on the received information the service provider inserts information representative of the network environment into the hierarchical multimedia descriptor that is delivered to the consumer device.

In embodiments of the invention information about consumer device end-point constraints (bit rate, screen resolution, language, age, etc.) is generated by the consumer device. This information may have been stored on the consumer device server or may have been made available in any different manner within reach of the skilled person. The information (together with the network environment information) is used in the adaptation process of the hierarchical multimedia descriptor.

Referring to figure 3 a specific example of a multimedia service is given. The multimedia service is a remote presentation service. It manages the participants (consumer devices) but also their streams via the media server. The producer is the presenter who sends audio, video and data (set of slides).

Figure 3 shows that the hierarchical multimedia descriptor carries four streams (or media): the presenter's speech (audio and text) 23, the slide set (data) 22, and the presenter's video 21. The specific tree structure indicates the presenter video stream depends on the slideset stream, which slideset stream in turn depends on the audio stream.

In step 100 the producer 3 sends a message to the service provider 5 informing the service provide to initiate the remote presentation service. In step 110 the producer 3 generates multimedia components (for instance four streams, as is explained later) and pushes (step 120) the multimedia components to the media server 4. The media server 4 generates information regarding the received multimedia components, more specifically a unique identifier (ID) identifying the received multimedia components and their address (for instance, a URL) and information about the media characteristics, such as stream type, bitrate, codec, language, and returns (S130) this information to the service provider 5.

The text stream 24 (cf. figure 3) of the presenter's speech may be automatically generated and added by the service provider 5. To this end the service provider 5 may be configured to produce several versions (multi-languages) of the text through Automatic Speech Recognition based on the received original audio stream 23.

The service provider 5 activates the multimedia descriptor of the container (S140) and once the service provider 5 has received the above-mentioned information, the producer instantiates (S 150) through the service provider 5 an hierarchical multimedia descriptor. The hierarchical multimedia descriptor is configured with the appropriate settings (multimedia components, such as audio, video and data streams).

Once the session is initiated and the multimedia descriptor is instantiated (step 150), the consumer device 6 may connect to the service provider 5 to retrieve the descriptor. In step 160 the consumer device 6 sends a message to the service provider 5 to register for the remote presentation service. The service provider then sends in step 170 the remote presentation hierarchical multimedia descriptor to the consumer device 6. The descriptor received by the consumer device 6 is then filtered through by the consumer device to adapt the descriptor to the particular consumer device's constraints, for instance constraints with respect to language, bitrate, age, screen resolution, etc. One of the objectives of this filtering is to reduce the multimedia descriptor (for instance, the multimedia graph defined by the producer) to a simpler form, suitable to the consumer device's context. The filtering may be achieved by processing (step 180) every node of the hierarchical tree 20, with respect to its dependencies 25-27 (fig. 3). The processing involves selecting (step 190) one or more multimedia components from the multiple multimedia components to be delivered to the consumer device. The selection may also involve selecting the version of each of the multimedia components to deliver to the consumer device (for instance, a version having a high bit ratio or a low bit ratio). This selection is based on the information in the hierarchical multimedia descriptor received from the service provider 5 and on information about the network environment and/or end-point constraints of the consumer device.

Information about the selection of the subset of multimedia components, optionally also selection of the specific version of the multimedia component to be delivered to the consumer device, is stored (step 200) in an adapted hierarchical multimedia descriptor. The consumer device 6 then sends a request (step 210) to the media server 4 to provide only the selected subset of multimedia components (and only in the requested version). Upon receipt of the request, the media server 4 may deliver (S220) the requested subset of multimedia components, preferably in the requested version, to the consumer device 6.

In an embodiment of the invention the media server 4 continues checking the network conditions (step 300). When a change of the network conditions is detected (step 310) by the media server 4, a corresponding message is transmitted to the consumer device (step 320). Based on this changed network conditions and dependent on the hierarchy of the multimedia components described in the hierarchical multimedia descriptor, the consumer device may further adapt the multimedia descriptor (step 330) and send a correspondingly adapted request to the media server (step 340). The media server 4 then may deliver (S350) the multimedia component (version) specifically requested by the consumer device.

The present invention is not limited to the preferred embodiments thereof described here. The rights sought are rather defined by the following claims, within the scope of which many modifications and changes can be envisaged.

## Claims

1. Method of delivering to a consumer device multimedia components in a multimedia container comprising multiple multimedia components and a multimedia descriptor, the method comprising:
- providing a multimedia container with an hierarchical multimedia descriptor including information representative of the hierarchical relationships between the individual multimedia components in the multimedia container;
- delivering the hierarchical multimedia descriptor to the consumer device;
- selecting by the consumer device at least one multimedia component from the multiple multimedia components to be delivered to the consumer device based on the information in the hierarchical multimedia descriptor and on information about the network environment and/or end-point constraints of the consumer device;
- requesting by the consumer device only the delivery of the selected at least one multimedia component;
- delivering the requested multimedia components to the consumer device.

2. Method of claim 1, wherein selecting the at least one multimedia component by the consumer device comprises:
- adapting the received hierarchical multimedia descriptor to the particular consumer device's end-point constraints and/or to the network environment;
and wherein requesting the delivery of multimedia components comprises:
- sending a request to deliver the selected at least one multimedia component using the adapted hierarchical multimedia descriptor.

3. Method of claim 1 or 2, wherein the provided hierarchical multimedia descriptor includes information on multiple multimedia component versions in which a multimedia component in the container may be made available, the method further comprising:
- selecting by the consumer device at least one multimedia component version to be delivered to the consumer device based on the information in the hierarchical multimedia descriptor and on information about the network environment and/or end-point constraints;
- requesting by the consumer device only the delivery of the selected at least one multimedia component of the selected multimedia component version.

4. Method of claim 3, wherein selecting the at least one multimedia component version by the consumer device comprises:
- adapting the received hierarchical multimedia descriptor to the particular consumer device's end-point constraints and/or to the network environment;
and wherein requesting the delivery of the selected at least one multimedia component comprises:
- sending a request to deliver the selected at least one multimedia component of the selected multimedia component version using the adapted hierarchical multimedia descriptor.

5. Method as claimed in any of the preceding claims, wherein the multimedia components of a container are classified as nodes in an hierarchical tree structure and wherein a subset of multimedia components is selected in accordance with the hierarchy of the associated nodes in the hierarchical tree structure and/or comprising selecting a subset of multimedia components from the multiple multimedia components having the highest one or more ranks in the hierarchy.

6. Method of any of the preceding claims, comprising selecting a subset of multimedia components from all possible multimedia components, the selected subset providing an optimal global delivery of the multimedia components of the container.

7. Method as claimed in any of the preceding claims, wherein the information in the hierarchical multimedia descriptor is representative of the properties of the multimedia components, and/or of the dependencies and relationships between the multimedia components, wherein adapting the information in the hierarchical multimedia descriptor preferably comprises processing every node of the tree structure with respect to the dependencies indicated in the multimedia descriptor.

8. Server assembly in a system for delivering multimedia components from a server assembly to a consumer device, the multimedia components being part of a multimedia container comprising multiple multimedia components and a multimedia descriptor, the server assembly being configured to:
- provide a multimedia container with an hierarchical multimedia descriptor including information representative of the hierarchical relationships between the individual multimedia components in the multimedia container;
- deliver the hierarchical multimedia descriptor over a network to the consumer device;
- receive a request for multimedia components;
- deliver requested multimedia components over the network to the consumer device.

9. Server assembly as claimed in claim 8, wherein the server assembly is configured to classify the multimedia components of a container as nodes in an hierarchical tree structure and to include information representative of the classification in the hierarchical multimedia descriptor.

10. Server assembly as claimed in any of claims 8-9, wherein the information in the hierarchical multimedia descriptor is representative of the properties of the multimedia components, and/or of the dependencies and relationships between the multimedia components.

11. Server assembly according to any of claims 8-10, wherein the server assembly comprises a media server and a service provider server, the media server and service provider server being connected to the a producer server and a consumer device through a network.

12. Consumer device in a system for delivering multimedia components from a server assembly to a consumer device, the consumer device being configured to:
- receive from the server assembly a multimedia container with an hierarchical multimedia descriptor including information representative of the hierarchical relationships between the individual multimedia components in the multimedia container;
- select a subset of multimedia components from multiple multimedia components to be delivered to the consumer based on the information in the hierarchical multimedia descriptor and on information about the network environment and/or end-point constraints of the consumer
- request only the delivery of the selected subset of multimedia components from the server assembly.

13. Consumer device as claimed in claim 12, wherein selecting a subset of multimedia components is performed in accordance with the hierarchy of associated nodes in the hierarchical tree structure; and/or wherein the consumer is configured to adapt the received hierarchical multimedia descriptor to the consumer's end-point constraints and/or to the network environment so as to provide an adapted hierarchical multimedia descriptor, wherein the consumer is preferably configured to request the delivery of the selected at least one multimedia component through sending the adapted hierarchical multimedia descriptor to the server assembly.

14. Consumer device of claim 13, wherein the hierarchical multimedia descriptor provided by the server assembly includes information on multiple multimedia component versions in which a multimedia component in the container may be made available;
wherein the consumer device is further configured to:
- select at least one multimedia component version to be delivered to the consumer, the selection being based on the information in the hierarchical multimedia descriptor and on information about the network environment and/or end-point constraints; and to
- request only the delivery of the selected at least one multimedia component of the selected multimedia component version.

15. A computer program comprising a code for performing the method according to any of the claims 1-7, when run on a computer.
